(19) Europäisches Patentamt
European Patent Office
Office européen des brevets

(11) EP 3 313 797 B1

(12) FASCICULE DE BREVET EUROPEEN

(45) Date de publication et mention de la délivrance du brevet:
**20.03.2019 Bulletin 2019/12**

(21) Numéro de dépôt: **16741099.2**

(22) Date de dépôt: **23.06.2016**

(51) Int Cl.:
***C03C 17/34*** (2006.01) ***C08G 73/10*** (2006.01)

(86) Numéro de dépôt international:
**PCT/FR2016/051552**

(87) Numéro de publication internationale:
**WO 2016/207563 (29.12.2016 Gazette 2016/52)**

(54) **COMPOSITIONS DE PRIMAIRE DE REVÊTEMENT ANTIADHÉSIF ET LEURS PROCÉDÉS DE PRÉPARATION**

ANTIHAFTBESCHICHTUNGPRIMERZUSAMMENSETZUNGEN UND VERFAHREN ZUR HERSTELLUNG DAVON

NON-STICK COATING PRIMER COMPOSITIONS AND PROCESSES FOR THE PREPARATION THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2015 FR 1555826**

(43) Date de publication de la demande:
**02.05.2018 Bulletin 2018/18**

(73) Titulaire: **SEB S.A.**
**69130 Ecully (FR)**

(72) Inventeur: **GANTILLON, Barbara**
**74320 Leschaux (FR)**

(74) Mandataire: **Soares, Luis Filipe**
**SEB Développement SAS**
**Campus SEB**
**112 Chemin du Moulin Carron**
**69134 Ecully Cedex (FR)**

(56) Documents cités:
**EP-A1- 0 386 379**
**FR-A1- 2 625 450**
**FR-A1- 2 915 205**
**US-A1- 2005 245 715**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 313 797 B1

**Description**

La présente invention concerne de manière générale des compositions de primaire de revêtement antiadhésif à base de résine polyimide et/ou de résine polyamide-imide. La présente invention concerne également des procédés de préparation de telles compositions. Enfin, la présente invention concerne des revêtements antiadhésifs incorporant de telles compositions et un procédé de fabrication d'articles comportant de tels revêtements antiadhésifs.

Les revêtements antiadhésifs à base de résine fluorocarbonée, notamment de polytétrafluoroéthylène (PTFE), sont largement répandus dans le domaine des articles culinaires. Ils sont réalisés à partir d'au moins une couche de primaire contenant une résine fluorocarbonée et une résine d'accroché. Cette couche de primaire est alors revêtue d'une ou plusieurs couches à base de résine fluorocarbonée, notamment du PTFE, dans lesquelles la quantité de résine fluorocarbonée est graduellement augmentée.

Les résines d'accroché, permettant l'adhésion de cette couche de primaire et des autres couches fluorées sur le support, sont généralement de type polyamide-imide (PAI), polyimide (PI), poly(sulfure de phénylène) (PPS), polyéthersulfone (PES), et polyétheréthercétone (PEEK).

Dans le cas particulier où l'on veut des couches de primaire de couleur claire, on préfère les résines PES, PPS ou PEEK.

Toutefois, la mise en oeuvre de ces résines n'est pas facile, car elles sont peu solubles autrement que dans des solvants aprotiques polaires, qui sont pour la plupart soumis à un étiquetage en tant que produit nocif, voire même toxique dans la réglementation REACH. Ces résines sont en pratique utilisables en poudre. Cependant, l'obtention de poudres de faible granulométrie est difficile et coûteuse, ce qui fait qu'il est difficile de broyer ces polymères à une dimension moyenne inférieure à 10 $\mu$m. Il s'ensuit que la répartition de ces résines dans la couche de primaire n'est pas homogène et conduit à des pertes d'adhérence à l'usage.

De ce point de vue, les résines d'accroche qui sont livrées en solution ou en poudre diluable dans l'eau sont plus faciles à mettre en oeuvre. Elles incorporent toutefois de grandes quantités de solvant.

Lorsqu'elles sont livrées en poudre diluable dans l'eau, on s'affranchit certes de la contrainte solvant mais ces résines d'accroche montrent également une stabilité thermique qui est jugée insuffisante même si celle-ci n'a pas d'incidence sur la plupart des propriétés du revêtement obtenu. En effet, lors de l'étape de frittage de la résine fluorocarbonée, notamment du PTFE, (réalisée à plus de 370°C et préférentiellement à 415°C), une petite fraction de la résine d'accroche, notamment de la résine PAI, se décompose. De plus, l'utilisation d'une amine labile pour la mise en oeuvre en phase aqueuse de la résine d'accroche, notamment de la résine PAI, conduit à générer une proportion de composés organiques volatiles qui n'est pas négligeable et qui induit un jaunissement non acceptable du revêtement obtenu.

D'un autre côté, on connait la préparation de silice greffée par des acides polyamiques (Peng Liu, Iranian polymer Journal 14, (11) 2005, 968-972). Ces silices greffées présentent des tenues en températures améliorées ; cependant, d'une part, le composé de départ est une silice déjà existante, et, d'autre part, l'ensemble des modifications est réalisé en milieu solvant et leur utilisation est suggérée dans des milieux solvants.

Les documents brevets EP0386379 et FR2625450 décrivent tous deux et de manière similaire des mélanges de résine PAI et d'un aminosilane. Dans la façon de procéder qui est décrite, l'aminosilane est mélangé avec le précurseur de résine PAI déjà en solution aqueuse, c'est-à-dire qu'il incorpore déjà une amine pour la salification et, compte tenu du choix de résine PAI décrit dans les exemples, un solvant, ce solvant étant nécessaire pour la réalisation du mélange sous forme liquide.

Ces documents brevets ne s'exonèrent ni de la présence d'une amine volatile susceptible de générer du jaunissement ni de la présence de solvant aprotique polaire potentiellement toxique.

Enfin et de manière tout à fait classique, la formulation des compositions de primaire nécessite dans la pratique l'introduction de silice colloïdale à des fins de renforcement du film de primaire obtenu. Les quantités utilisées sont comprises entre 10 et 20 % en poids (exprimées par rapport au film sec). L'ajout de quantités plus faibles ne permet pas d'avoir un renforcement suffisant et il est difficile dans la pratique d'introduire des quantités plus élevées. Mais même à ces teneurs, on observe une agrégation des particules de silice entre elles ce qui a pour conséquence que l'on génère, au sein du film de primaire, des nanoporosités néfastes à l'imperméabilité du film et qui entrainent l'apparition de points de corrosion en quantité rédhibitoire.

Pour remédier à ces inconvénients et pour obtenir des revêtements antiadhésifs présentant une stabilité thermique et une résistance mécanique renforcées tout en conservant une bonne élasticité, une bonne tenue à la corrosion et une coloration ou un jaunissement fortement diminué, la demanderesse a mis au point des compositions de primaire de revêtement antiadhésif à base de résine polyimide et/ou de résine polyamide-imide, obtenues en faisant réagir la résine polyimide et/ou la résine polyamide-imide avec un agent de couplage et un alcoxysilane et/ou un alcoxylate métallique, l'agent de couplage permettant le couplage entre la résine PI et/ou PAI et l'alcoxysilane et/ou l'alcoxylate métallique. Une telle réaction conduit à la réticulation de l'ensemble par une réaction de type sol-gel et on obtient une structure hybride organique-inorganique avec la formation *in-situ* d'un réseau de domaines de silice de taille nanométrique parfaitement dispersés dans la matrice de résine PI et/ou PAI.

Les matériaux à structure hybride organique-inorganique ainsi obtenus sont des nanocomposites qui visent à être une combinaison synergique entre :

- une phase organique : la résine d'accroché PAI et/ou PI joue le rôle de matrice polymère organique. Elle apporte une flexibilité par ses fonctions amides et une grande thermostabilité par ses cycles imides au revêtement obtenu. D'autre part, la ductilité d'une telle matrice polymère facilite sa mise en oeuvre, en particulier dans le cas où le support (tel qu'un disque) doit ensuite être embouti ; et
- une phase inorganique : une charge de silice interpénétrée au sein de la matrice polymère pour renforcer les performances de résistance mécanique (dureté, rigidité), thermiques et anticorrosives du revêtement obtenu. Cette charge est en réalité un réseau de domaines inorganiques nanométriques (dits « nanoformés ») généré *in-situ* dans la matrice polymère, par voie sol-gel à partir d'un précurseur inorganique de type oxyde métallique.

La présente invention consiste donc à associer une résine d'accroche PAI et/ou PI (phase organique) à une phase inorganique néoformée par l'intermédiaire d'un agent de couplage lié aux phases organique et inorganique par des liaisons covalentes. De tels agents de couplage présentent une fonction capable de s'ouvrir et de se lier aux cycles imides de la résine PAI et/ou PI et des fonctions capables de générer la silice dans les conditions de mise en oeuvre choisies.

Les matériaux hybrides résine polyamide-imide/silice sont connus de l'homme de l'art.

Ainsi, le document brevet KR20090111951 décrit un procédé de fabrication d'un matériau hybride résine polyamide-imide/silice, pour le revêtement de fils électriques. Dans le procédé décrit, on ajoute de la silice colloïdale à un silane organique, pour former un sol de silice colloïdale à base de silane de silice (c'est-à-dire de la silice colloïdale avec des groupes organiques à sa surface). Puis, on ajoute un solvant organique au sol de silice colloïdale, que l'on incorpore à de la résine polyamide-imide pour fabriquer un hybride de silice et de résine polyamide-imide. Enfin, on ajoute un aminosilane à la solution de sol hybride et l'ensemble est agité. Le procédé de KR20090111951 enseigne un procédé permettant de greffer de la silice déjà existante via un agent de couplage sur la résine PAI. Mais, il ne s'agit pas d'un procédé sol-gel avec génération *in-situ* de silice, permettant d'obtenir des domaines de silice nanométriques très bien dispersés dans la matrice polymère.

Par ailleurs, le document brevet US2005/0245715 décrit un procédé de réalisation d'un film composite de résine polymère et de silice à partir de carboxysilanes et d'une résine polymère, qui utilise un agent de couplage aminé ou avec un groupement époxy sur base halogénée. Toutefois, la résine polymère utilisée dans le procédé de ce document est un polyamide-acide amique (PAA), qui est un précurseur de la résine PAI, et non pas directement une résine PAI elle-même. Les films composites de ce document sont essentiellement utilisés dans le domaine des dispositifs électroniques et microélectroniques et des éléments photoélectriques.

La présente invention a donc pour objet une composition de primaire de revêtement antiadhésif qui résout les problèmes précités. Il s'agit en particulier d'une composition de primaire de revêtement antiadhésif comprenant :

- une résine polyimide et/ou une résine polyamide-imide,
- un alcoxysilane et/ou un alcoxylate métallique,
- un agent de couplage apte à coupler la résine polyimide et/ou la résine polyamide-imide et l'alcoxysilane et/ou l'alcoxylate métallique, et
- un solvant aprotique polaire.

Par agent de couplage apte à coupler la résine polyimide et/ou la résine polyamide-imide et l'alcoxysilane et/ou l'alcoxylate métallique, on entend, au sens de la présente invention, un composé possédant, d'une part, un ou plusieurs groupes fonctionnels pouvant se lier à la résine PI et/ou PAI, notamment aux cycles imides de la résine PI et/ou PAI, et, d'autre part, un ou plusieurs groupes fonctionnels propices à réagir avec l'alcoxysilane et/ou l'alcoxylate métallique pour former *in-situ* de la silice.

De préférence, la composition de primaire selon l'invention comprend une résine polyamide-imide.

De manière avantageuse, la résine polyimide et/ou la résine polyamide-imide peut être présente dans la composition de primaire selon l'invention à raison de 20 à 70 % en poids, et de préférence de 20 à 60 % en poids, par rapport au poids total de ladite composition de primaire.

De manière avantageuse, l'alcoxysilane de la composition de primaire selon l'invention peut être choisi parmi le méthyltriméthoxysilane (MTMS), le tétraméthoxysilane (TMOS), le tétraéthoxysilane (TEOS), le tétrapropoxysilane, le méthyltriéthoxysilane (MTES), le diméthyldiméthoxysilane, le phényltriéthoxysilane et leurs mélanges.

A titre d'alcoxysilane, on utilisera de préférence, dans la composition de primaire selon l'invention, du tétraéthoxysilane (TEOS).

De manière avantageuse, l'alcoxylate métallique de la composition de primaire selon l'invention peut être choisi parmi les aluminates, les titanates, les oxydes de cérium et les oxydes de zirconium.

De manière avantageuse, l'alcoxysilane et/ou l'alcoxylate métallique de la composition de primaire selon l'invention peut être hydrolysé en milieu acide ou en milieu basique. De préférence, l'alcoxysilane et/ou l'alcoxylate métallique est hydrolysé en milieu basique. En milieu acide, la réaction d'hydrolyse est rapide devant la réaction de condensation entraînant la gélification du mélange ; au contraire, en milieu basique, la réaction de condensation est plus rapide que l'hydrolyse permettant d'obtenir des solutions colloïdales.

De manière avantageuse, la composition de primaire selon l'invention peut en outre comprendre un alcool.

A titre d'alcools utilisables dans la composition de primaire selon l'invention, on peut notamment citer le terpinéol, le propane-2-ol, le méthanol, le 2-(2-butoxyéthoxy)éthanol, l'isopropanol, les glycols (tels que par exemple le butylglycol, l'éthylène-glycol-butyl-éther (ou EGBE), le terpinéol, le texanol (nom chimique: monoisobutyrate de 2,2,4-triméthylpentane-1,3-diol), le diéthylène glycol monométhyléther, le méthoxypropanol et leurs mélanges.

De manière avantageuse, la teneur totale relative en poids sec de l'agent de couplage par rapport à la résine polyimide et/ou la résine polyamide-imide peut être comprise entre 2 et 20 % dans la composition de primaire selon l'invention.

A titre d'agents de couplage utilisables dans la composition de primaire selon l'invention, on peut notamment citer les silazanes (et de préférence l'hexaméthyldisilazane), les dérivés de silanes, et leurs mélanges.

En tant que dérivés de silane utilisables dans la composition de primaire selon la présente invention, on peut notamment citer les aminosilanes, tels que le 3-aminométhyltriméthoxysilane (APrTMOS ou APTMOS), le 3-aminopropyltriéthoxysilane (APTES ou APrTEOS), le 3-aminopropyltri(méthoxyéthoxy-éthoxy)silane, le 4-aminobutyltriéthoxysilane, le 3-aminophényltriméthoxysilane (APTMOS), le m-aminophényltriméthoxysilane, le p-aminophényltriméthoxysilane, le 3-aminophényltriéthoxysilane (APTEOS), le 11-aminoundécyltriéthoxysilane, l'aminopropyl-silanetriol, le bis(methyldiéthoxysilylpropylamine), le bis(triéthoxysilylpropyl)amine, le bis(triméthoxy-silylpropyl)amine, le bis((3-triméthoxysilyl)propyl)-éthylènediamine, et leurs mélanges. De préférence, l'agent de couplage de la composition de primaire selon l'invention est le 3-aminopropyltriéthoxysilane (APTES).

En tant que dérivés de silanes utilisables dans la composition de primaire selon l'invention, on peut notamment également citer les époxysilanes (de préférence le γ-glycidyloxypropyltriméthoxysilane (GPTMS)), le γ-glycido-propyltriéthoxysilane, le γ-glycidoxypropyltriméthoxysilane (GTMOS), le γ-glycidoxypropyltriéthoxysilane (GTEOS), le vinyltriéthoxysilane, le méthacryloxyéthyl triéthoxysilane, le méthacryloxypropyl triméthoxysilane, le methyl-triéthoxysilane, le diméthyldiéthoxysilane, les isocyanates de silane de formule $OCN-R^1-Si(R^2)_3$ dans laquelle $R^1$ est un groupement alcène en $C_1$-$C_6$ (tel que méthylène, éthylène, propylène, butylène, pentylidène et hexaméthylène) ou un groupement arylène en $C_1$-$C_6$ (tel que phénylène ou naphtylène) et $R^2$ est identique à $R^1$ ou est différent de R1 et est alors un groupement alcoxy en $C_1$-$C_6$, et leurs mélanges.

On peut également citer à titre d'agents de couplage utilisables dans le cadre de la présente invention les aminoacides, tels qu'une tyrosine de formule

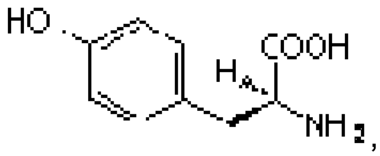

ou une glycine, de formule

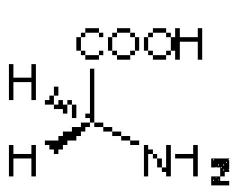

De manière avantageuse, le solvant aprotique polaire est présent dans la composition de primaire selon l'invention à raison de 1 à 70 % en poids par rapport au poids total de la composition de primaire.

De manière avantageuse, le solvant aprotique polaire peut comprendre l'un au moins de la N-formylmorpholine (NFM), de la N-éthylmorpholine, du diméthylsulfoxyde (DMSO), de la N-acétylmorpholine (NAM), de la N-éthylpyrrolidone (NEP), de la N-butylpyrrolidone (NBP), de la N-méthylpyrrolidone (NMP), du 1,3-dioxolane, du 2,5,7,10-tétraoxaundécane, le N-méthylpyrrolidine cétone, le N,N-diméthylformylamide, le N,N-diméthylacétamide.

De manière avantageuse, la composition de primaire selon l'invention peut être exempte de liant thermostable, et notamment de résine fluorocarbonée.

De manière avantageuse, la composition de primaire selon l'invention peut en outre comprendre au moins une

charge ou au moins un pigment.

La composition de primaire selon l'invention telle que définie ci-dessus permet d'obtenir une composition de primaire hybride. Cette composition de primaire hybride est un produit intermédiaire obtenu après mélange des différents composants et dans lequel se sont formé une matrice de résine et des domaines nanométriques de silice dispersés dans cette résine.

La présente invention a donc également pour objet une composition de primaire hybride de revêtement antiadhésif comprenant une matrice de résine polyimide et/ou de résine polyamide-imide, dans laquelle sont dispersés des domaines de silice ayant une taille inférieure à 200 nm dans un solvant aprotique polaire, la taille des domaines de silice étant mesurée soit en humide par granulométrie laser dans la composition de primaire hybride selon l'invention, soit par une analyse par microscopie électronique en transmission (analyse TEM) sur le film de primaire cuit obtenu à partir de la composition de primaire hybride selon l'invention.

La matrice de résine polyimide et/ou de résine polyamide-imide dans laquelle sont dispersés les domaines de silice peut avantageusement être en dispersion colloïdale dans le solvant aprotique polaire.

De manière avantageuse, les domaines de silice dans la composition de primaire hybride selon l'invention peuvent présenter une taille inférieure à 100 nm, et de préférence comprise entre 10 et 50 nm.

De manière avantageuse, la teneur relative en poids sec des domaines de silice par rapport à la matrice de résine polyimide et/ou de résine polyamide-imide peut être comprise entre 10 et 25 %, et de préférence entre 10 et 20 %, dans la composition de primaire hybride selon l'invention.

De manière avantageuse, le solvant aprotique polaire peut être présent dans la composition de primaire hybride selon l'invention à raison de 1 à 70 % en poids par rapport au poids total de la composition de primaire hybride.

De manière avantageuse, le solvant aprotique polaire peut comprendre l'un au moins de la N-formylmorpholine (NFM), de la N-éthylmorpholine, du diméthylsulfoxyde (DMSO), de la N-acétylmorpholine (NAM), de la N-éthylpyrrolidone (NEP), de la N-butylpyrrolidone (NBP) et de la N-méthylpyrrolidone (NMP), du 1,3-dioxolane, du 2,5,7,10-tétraoxaundécane, le N-méthylpyrrolidine cétone, le N,N-diméthylformylamide, le N,N-diméthylacétamide.

De manière avantageuse, la composition de primaire hybride selon l'invention peut être exempte de liant thermostable, et notamment de résine fluorocarbonée.

De manière avantageuse, la composition de primaire hybride selon l'invention peut en outre comprendre au moins une charge ou au moins un pigment.

Dans le cadre de la présente invention, on utilisera de préférence, à titre de charge dans la composition de primaire selon l'invention ou dans la composition de primaire hybride selon l'invention, des nanoparticules de silice, de l'alumine, du talc, du kaolin, de la baryte, de la wollastonite, un carbure de silicium, une argile, un silicate de calcium sous forme lamellaire en feuillet, un silicate hydraté lamellaire, un phyllosilicate, un silicate de calcium hydraté, un organo-silane de calcium, et leurs mélanges.

Dans le cadre de la présente invention, on utilisera de préférence, à titre de pigment dans la composition de primaire selon l'invention ou dans la composition de primaire hybride selon l'invention, l'aluminate de cobalt ($CoAl_2O_4$), le titanate de chrome, l'antimoine, les oxydes de fer, le titanate de nickel, le noir de carbone, les silico-aluminates, le dioxyde de titane, les pigments inorganiques à structure cristalline en spinelle à base de différents oxydes de métaux, les paillettes de mica revêtues d'oxyde de fer ou d'oxyde de titane, les paillettes d'aluminium revêtues d'oxyde de fer, le rouge de pérylène, les pigments semi-conducteurs thermochromes (par exemple des oxydes métalliques semi-conducteurs tels que $Fe_2O_3$, $Bi_2O_3$, ou $BiVO_4$...) et leurs mélanges.

La présente invention a encore pour objet un revêtement antiadhésif comprenant au moins une couche de composition de primaire hybride de revêtement antiadhésif selon l'invention.

La ou les couches de composition de primaire hybride selon l'invention sont typiquement appliquées directement sur un support, notamment sur le support d'un article culinaire, le support étant ou non préalablement soumis à un traitement de surface.

Sur cette ou ces couches de primaire, est généralement appliquée une première couche de finition, elle-même de préférence recouverte d'au moins une deuxième couche de finition.

La ou les couches de finition comprennent au moins un liant thermostable compatible avec la ou les couches de composition de primaire hybride.

A titre de liant thermostable utilisable dans la ou les couches de finition selon l'invention, on peut notamment citer les émaux, les résines fluorocarbonées (seules ou en mélange), les polymères inorganiques ou hybrides organiques-inorganiques synthétisés par voie sol-gel.

La présente invention a encore pour objet un procédé de préparation d'une composition de primaire de revêtement antiadhésif selon l'invention ou d'une composition de primaire hybride de revêtement antiadhésif selon l'invention, le procédé comprenant les étapes suivantes :

a) l'introduction de l'agent de couplage dans une solution comprenant la résine polyimide et/ou la résine polyamide-imide et le solvant aprotique polaire ; et

b) l'ajout en milieu basique de l'alcoxysilane et/ou de l'alcoxylate métallique, et d'eau au mélange de l'étape a).

S'il s'agit de la préparation d'une composition de primaire hybride de revêtement antiadhésif selon l'invention, la présente invention a encore pour objet un procédé comprenant les étapes suivantes :

a) l'introduction de l'agent de couplage dans une solution comprenant la résine polyimide et/ou la résine polyamide-imide et le solvant aprotique polaire ; et
b) l'ajout de l'alcoxysilane et/ou de l'alcoxylate métallique préhydrolysé au mélange de l'étape a).

Dans ce cas particulier, ce procédé selon l'invention pourra avantageusement comprendre en outre une étape c) d'hydrolyse de l'alcoxysilane et/ou de l'alcoxylate métallique pour obtenir l'alcoxysilane et/ou l'alcoxylate métallique pré-hydrolysé, l'étape c) d'hydrolyse étant réalisée avant l'étape b) et comprenant :

- l'hydrolyse en milieu basique de l'alcoxysilane et/ou de l'alcoxylate métallique dans un mélange d'eau et d'alcool, ou
- l'hydrolyse en milieu basique de l'alcoxysilane et/ou de l'alcoxylate métallique dans un mélange d'eau et de solvant aprotique polaire.

La résine PI et/ou PAI, l'agent de couplage, le solvant aprotique polaire, l'alcoxysilane et l'alcoxylate métallique sont tels que définis précédemment.

Que ce soit pour la préparation d'une composition de primaire de revêtement antiadhésif selon l'invention ou celle d'une composition de primaire hybride de revêtement antiadhésif selon l'invention, les procédés selon l'invention pourront avantageusement comprendre en outre une étape d) d'ajout de charges et/ou pigments au mélange issu de l'étape b).

Les charges et/ou pigments sont tels que définis précédemment.

De même, que ce soit pour la préparation d'une composition de primaire de revêtement antiadhésif selon l'invention ou celle d'une composition de primaire hybride de revêtement antiadhésif selon l'invention, les procédés selon l'invention pourront avantageusement comprendre en outre une étape e) de mise en solution de la résine polyimide et/ou la résine polyamide-imide dans le solvant aprotique polaire, cette étape e) étant réalisée avant l'étape a).

La présente invention a encore pour objet un procédé de fabrication d'un article comprenant un revêtement antiadhésif selon l'invention, le procédé comprenant les étapes suivantes :

A) la fourniture d'un support présentant deux faces opposées ;
B) l'application sur au moins une des faces dudit support

- d'au moins une couche de la composition de primaire hybride de revêtement antiadhésif selon l'invention, ou
- d'au moins une couche de composition de primaire hybride de revêtement antiadhésif obtenue selon les procédés selon l'invention de préparation d'une composition de primaire de revêtement antiadhésif ou d'une composition de primaire hybride de revêtement antiadhésif ;

C) la cuisson de l'ensemble à une température comprise entre 390°C et 430°C.

De manière avantageuse, le procédé de fabrication d'un article selon l'invention peut en outre comprendre une étape B') d'application sur la couche obtenue à l'étape B), avant la cuisson de l'étape C), d'au moins une couche de finition de revêtement antiadhésif. Avantageusement, l'étape B') d'application peut être réalisée sur la couche obtenue à l'étape B) humide. Lorsque la couche obtenue à l'étape B) est séchée avant l'étape B'), elle peut alors devenir hydrophobe et empêcher l'adhérence de la couche de finition déposée ensuite.

La couche de finition de revêtement antiadhésif est telle que définie précédemment.

Enfin, la présente invention a encore pour objet un article susceptible d'être obtenu selon le procédé de fabrication d'un article selon l'invention.

On peut envisager différents types d'articles conformes à l'invention, de différentes formes et réalisés dans différents matériaux.

Ainsi, il peut s'agir d'un article comportant un support en un matériau choisi parmi les métaux, le verre, les céramiques et les matières plastiques.

A titre de supports métalliques utilisables dans le cadre de la présente invention, on peut avantageusement citer les supports en aluminium ou en alliage d'aluminium anodisé ou non, ou en aluminium poli, brossé ou microbillé, sablé, traité chimiquement ou en acier inoxydable poli, brossé ou microbillé, ou en fonte de fer ou d'aluminium, en titane ou en cuivre martelé ou poli.

L'article selon l'invention peut notamment être un article culinaire, et en particulier un article culinaire dont l'une

des faces constitue une face interne destinée à être en contact avec des aliments placés à l'intérieur dudit article et l'autre face est une face externe convexe destinée à être en contact avec une source de chaleur.

A titre d'exemples non limitatifs d'articles culinaires conformes à la présente invention, on citera notamment des articles culinaires tels que les casseroles et les poêles, les woks et les sauteuses, les faitouts et les marmites, les autocuiseurs, les crêpières, les grills, les moules et plaques pour la pâtisserie, les coupelles à raclette, les plaques et grilles de barbecue, les bols de préparation, les cuves de friteuses et de cuiseurs à riz.

On peut également envisager d'autres types de supports qui ne sont pas limités au seul domaine culinaire. Ainsi, on peut également envisager à titre d'articles conformes à l'invention des articles électroménagers tels que des fers à repasser, des fers à friser, des lisseurs à cheveux etc., des pots isothermes (pour cafetières par exemple) ou des bols mixeurs.

L'invention est illustrée plus en détail dans les exemples suivants.

Dans ces exemples, sauf indication contraire, tous les pourcentages et parties sont exprimés en pourcentages massiques.

## EXEMPLES

### Tests

Détermination de l'extrait sec d'une composition

**PRINCIPE**

L'extrait sec d'une composition est la partie solide résiduelle restant après évaporation des matières volatiles qu'elle contient. La température et la durée de séchage jouent un grand rôle car les solvants à point d'ébullition élevé, les fractions de monomères, les diluants réactifs et les sous-produits de réaction (selon leur degré de rétention) quittent très lentement le film en formation. Il est donc très important de définir de façon conventionnelle des conditions de séchage normalisées, aussi proches que possible de la pratique.

**MODE OPERATOIRE**

Pour mesurer cet extrait sec, on procède de la manière suivante :

- on pèse une coupelle en aluminium : $m_0$ = masse de la coupelle ;
- on dispose entre 0,5 g et 3 g de composition à étudier dans cette coupelle ;
- on pèse la coupelle remplie : $m_1$ = masse de la coupelle remplie ;
- on place la coupelle remplie dans une étuve à 210°C pendant deux heures ;
- après étuvage et après refroidissement, on pèse la coupelle : $m_2$ = masse de la coupelle remplie après étuvage et refroidissement ;
- l'extrait sec est donné par la formule ci-dessous :

$$\text{Extrait sec} = 100*[(m_2-m_0)/(m_1-m_0)]$$

Mesure de la taille et de la distribution de tailles des particules par diffraction de la lumière

La granulométrie de la solution colloïdale obtenue en hydrolysant le TEOS (cf. exemple 1 ci-dessous) est caractérisée à l'aide d'un granulomètre à diffraction laser commercialisé sous la dénomination commerciale Nanosizer de la société Malvern qui mesure le mouvement brownien des particules en suspension et le relie à la taille des colloïdes (une petite particule se déplace plus vite qu'une plus grosse particule) via la diffraction de la lumière.

Evaluation de l'adhérence d'un revêtement sur un support en aluminium lisse

On effectue un test par quadrillage selon la NORME NF T 30-038 (NORME NF EN ISO 2409), suivi d'une immersion du support revêtu pendant 18 heures (consistant en une alternance de 3 cycles de 3 heures dans de l'eau bouillante et de 3 cycles de 3 heures dans de l'huile à 200°C). Puis, on observe si le revêtement antiadhésif présente ou non un décollement. La cotation est réalisée comme expliqué dans le tableau ci-dessous.

| Cotation | Description |
|---|---|
| 0 | Les bords des incisions sont parfaitement lisses : aucun des carrés du quadrillage ne s'est détaché. |
| 1 | Détachement de petites écailles du revêtement aux intersections des incisions, qui affecte environ 5 % de la partie quadrillée. |
| 2 | Le revêtement s'est détaché le long des bords ou aux intersections des incisions, et la surface détachée représente nettement plus de 5 % jusqu'à environ 15 % de la partie quadrillée. |
| 3 | Le revêtement s'est détaché le long des bords des incisions en partie ou en totalité en larges bandes ou s'est détaché en partie ou en totalité en divers endroits des quadrillages. La surface détachée représente nettement plus de 15 % jusqu'à environ 35 % de la partie quadrillée. |
| 4 | Le revêtement s'est détaché le long des bords des incisions en larges bandes ou quelques carrés se sont détachés en partie ou en totalité. La surface détachée représente nettement plus de 35 % jusqu'à environ 65 % de la partie quadrillée. |
| 5 | Tous les degrés d'écaillage qui ne peuvent pas être cotés selon la cotation 4. |

Evaluation du jaunissement

Le jaunissement après cuisson des supports revêtus est évalué visuellement par comparaison inter-supports.

Analyse morphologique

L'analyse morphologique des charges de silices au sein d'une matrice de résine polymère est réalisée par analyse TEM.

L'analyse TEM est une méthode efficace pour visualiser la morphologie des charges de silice au sein d'une matrice polymère, telle qu'une résine PAI, que ces charges soient préformées (colloïdales type Ludox) ou obtenues *in-situ* par voie sol-gel.

**EXEMPLE 1**

Dans une première étape, on prépare une solution basique de TEOS hydrolysé en mélangeant sous agitation magnétique et à température contrôlée à l'ambiante les composés suivants :

| | |
|---|---|
| - TEOS pur | : 262,28 g |
| - NEP | : 142,43 g |
| - un mélange d'eau et d'une base : | |
| ◦ eau | : 52,21 g |
| ◦ ammoniaque à 10,25 % en poids dans l'eau | : 42,85 g |
| TOTAL | : 499,77 g |

Cette solution est maintenue sous agitation lente pendant 2 heures à température ambiante. On obtient une solution opalescente, stable pendant plusieurs mois, qui présente les caractéristiques suivantes.

Caractéristiques :

- pH : 9,6
- viscosité : 280 mPa.s
- taux de TEOS : 52,5 % / masse de la solution humide totale
- aspect : translucide, de couleur iridisée
- taille de particules contrôlée par granulométrie laser : 20 à 40 nm
- durée de vie en pot (en anglais « *pot-life* ») : supérieure à plusieurs mois

Dans une seconde étape, on introduit une résine PAI sous forme solvantée, à 29 % en poids dans de la NEP, dans un réacteur. Après dilution de la résine PAI dans de la NEP, on ajoute de l'APTES. La réaction de neutralisation des groupements acides terminaux par l'aminosilane conduit au greffage chimique du silane. La réaction se fait à température ambiante sous agitation lente pendant 2 heures.

On ajoute enfin la solution de TEOS hydrolysé telle que décrite dans la 1ère étape et on laisse le mélange sous agitation lente à température ambiante pendant 20 à 24 heures.

Les proportions du mélange sont indiquées ci-dessous :

| | | |
|---|---|---|
| - résine PAI à 29 % en poids dans la NEP | : | 218,35 g |
| - NEP | : | 98,31 g |
| - APTES | : | 5,40 g |
| - solution basique de TEOS hydrolysé | : | 177,94 g |
| TOTAL | : | 500,00 g |

Le rapport en masse (exprimée en sec/sec) de résine PAI/$SiO_2$ est de 77/23.

La solution colloïdale de matériau hybride résine PAI/silice dans la NEP ainsi obtenue a un extrait sec de 16,5 %, un pH de 10,2 et une viscosité mesurée en coupe 4 (selon la norme DIN EN ISO 2433/ASTM D5125) de 80 secondes. Cette solution est stable jusqu'à 3 semaines de stockage à l'ambiante.

Selon un premier mode de réalisation (application sur un support préformé), cette solution colloïdale de matériau hybride est utilisée telle quelle et enduite par pulvérisation en couche mince sur un support d'aluminium se présentant sous la forme d'une calotte (support préformé) préalablement soumise à un traitement de surface.

Les performances obtenues sont les suivantes :

- La couche mince réalisée ci-dessus, analysée par TEM, montre qu'un matériau hybride organique/inorganique avec des domaines nanométriques de silice, non agglomérés, a été obtenu (réseaux co-continus de silice et de résine PAI). L'analyse TEM montre des particules de silice individuelles d'un diamètre inférieur à 100 nm, sans agglomérats, ni agrégats.
- Les charges de silice sont présentes sur toute l'épaisseur du film, comme illustrée sur la figure 1, qui est une image TEM d'une coupe du revêtement formé montrant une distribution homogène des particules nanométriques de silice dans la matrice de résine PAI et leurs dimensions : le diamètre moyen des particules de silice est de l'ordre de $37 \pm 4$ nm.
- La présence d'un réseau de silice co-continu est mise en évidence par calcination. On obtient une pellicule dont l'analyse chimique par spectrométrie infrarouge révèle deux bandes caractéristiques de la silice à $\sigma = 1075\ cm^{-1}$ et $\sigma = 804\ cm^{-1}$ (condensation des ponts siloxanes Si-O-Si).
- La mise en oeuvre de cette couche de primaire hybride dans un système d'enduction en trois couches (couche de primaire hybride organique/inorganique + première couche de finition sans résine PAI et à base de PTFE appliquée en humide sur humide + deuxième couche de finition à base de PTFE) et fritté en conditions standards (11 minutes à 430°C) donne des cotations de 0 aux trois cycles du test d'adhérence.
- Le revêtement hybride ainsi obtenu est non jaunissant (-35 % de jaunissement par rapport à un système primaire standard avec du PTFE telle que décrit dans l'exemple comparatif 1).
- Un test de corrosion du revêtement hybride, réalisé par 24 heures de contact avec l'eau salée à 10 % et à l'ébullition, se traduit par l'absence de points de corrosion.

Par ailleurs, selon un deuxième mode de réalisation (application sur un support avec post-formage du support), la composition de primaire hybride obtenue à l'étape 2 est appliquée sur un disque d'aluminium préalablement décapé par attaque chimique, séché puis étuvé. Une première couche de finition sans résine PAI et à base de PTFE est ensuite appliquée sur cette couche de primaire en humide sur humide, puis une deuxième couche de finition à base de PTFE est appliquée sur la première couche de finition. L'ensemble est fritté en conditions standards (11 minutes à 430°C). Le support ainsi revêtu est embouti pour donner une calotte revêtue sur sa face intérieure.

Cette calotte revêtue post-formée présente des performances similaires à la calotte revêtue préformée décrite précédemment, ce qui illustre l'aptitude à l'emboutissage de ce revêtement hybride.

## EXEMPLE 2

On introduit une résine PAI sous forme solvantée, à 29 % en poids dans de la NEP, dans un réacteur. On la dilue avec de la NEP, puis on vient ajouter de l'APTES. La réaction de neutralisation des groupements acides terminaux

par l'aminosilane conduit au greffage chimique du silane. La réaction se fait à température ambiante sous agitation lente pendant 2 heures.

On ajoute ensuite du TEOS avec de l'eau déminéralisée et une base, puis on laisse le mélange sous agitation lente à température ambiante pendant 20 à 24 heures. Les proportions des différents constituants sont les suivantes :

| | | |
|---|---|---|
| - résine PAI à 29 % en poids dans la NEP | : | 218,35 g |
| - NEP | : | 149,20 g |
| - APTES | : | 5,40 g |
| - TEOS pur | : | 93,38 g |
| - eau déminéralisée | : | 18,41 g |
| - ammoniaque à 10,25 % en poids dans l'eau | : | 15,26 g |
| TOTAL | : | 500 g |

Le rapport en masse (exprimé en sec/sec) de résine PAI/$SiO_2$ est de 77/23.

La solution colloïdale de matériau hybride résine PAI/silice dans la NEP ainsi obtenue a un extrait sec de 16,5 %, un pH de 10,2 et une viscosité mesurée en coupe 4 (selon la norme DIN EN ISO 2433/ASTM D5125) de 65 secondes. Cette solution est stable jusqu'à 3 semaines de stockage à l'ambiante.

Cette solution est utilisée telle quelle et enduite par pulvérisation en couche mince sur un support d'aluminium se présentant sous la forme d'une calotte (support préformé) préalablement soumise à un traitement de surface.

Les performances obtenues sont les suivantes :

- La mise en oeuvre de cette couche de primaire hybride dans un système d'enduction en trois couches (couche de primaire hybride organique/inorganique + première couche de finition sans résine PAI et à base de PTFE appliquée en humide sur humide + deuxième couche de finition à base de PTFE) et fritté en conditions standards (11 minutes à 430°C) donne des cotations de 0 aux trois cycles du test d'adhérence.
- Le revêtement hybride ainsi obtenu est non jaunissant (-30 % de jaunissement par rapport à un système primaire standard avec du PTFE telle que décrit dans l'exemple comparatif 1).
- Un test de corrosion du revêtement hybride, réalisé par 24 heures de contact avec l'eau salée à 10 % et à l'ébullition, se traduit par l'absence de points de corrosion.

**EXEMPLE Comparatif 1**

On réalise un mélange aqueux de semi-fini comportant les composés suivants, dont les quantités respectives sont indiquées en g ci-dessous :

| | | |
|---|---|---|
| - résine PAI à 29 % en poids dans la NEP | : | 220,0 g |
| - NEP | : | 79,0 g |
| - triéthylamine | : | 22,0 g |
| - eau déminéralisée | : | 350,0 g |
| - silice colloïdale | : | 63,5 g |
| TOTAL | : | 734,5 g |

La silice colloïdale utilisée est non modifiée en surface, a une surface spécifique de 220 $m^2$/g environ, et se présente sous forme de dispersion aqueuse de nanoparticules avec un extrait sec de 30 % en poids dans l'eau.

Pour réaliser ce mélange aqueux de semi-fini, on procède comme suit :

- on introduit dans un réacteur Discontimill la résine PAI avec le solvant et la triéthylamine ;
- le mélange ainsi obtenu est ensuite broyé dans le réacteur discontimill à température ambiante ; puis
- on ajoute très progressivement l'eau pour réaliser le passage en phase aqueuse et l'obtention d'un polyamide-acide amique dispersé ;
- la réaction de broyage est maintenue pendant 2 heures pour obtenir un mélange intermédiaire.

Les propriétés du mélange intermédiaire ainsi obtenu sont les suivantes :

- extrait sec théorique : 9,5 %

- extrait sec mesuré : 9,0 %
- il s'agit d'un produit translucide de couleur miel, visqueux
- viscosité (en coupe 4 selon la norme DIN EN ISO 2433/ASTM D5125) : 140 sec

On introduit, dans le mélange intermédiaire, à température ambiante, la dispersion colloïdale de silice de taille de l'ordre de 40 à 200 nm, pour obtenir le mélange aqueux de semi-fini.

Les propriétés du mélange aqueux de semi-fini ainsi obtenu sont les suivantes :

- extrait sec théorique : 11,3 %,
- extrait sec mesuré dans la solution : 11,0 %,
- il s'agit d'un produit translucide de couleur miel, visqueux,
- viscosité (en coupe 4 selon la norme DIN EN ISO 2433/ASTM D5125) : 150 sec,
- le taux de silice est de 23 % en masse par rapport au polyamide-acide amique.

On réalise ensuite, à partir du mélange aqueux de semi-fini, une composition aqueuse de primaire d'accroché comportant les composés suivants :

| | | |
|---|---|---|
| - dispersion PTFE à 60 % en poids dans l'eau | : | 30,5 g |
| - dispersion de noir de carbone à 25 % en poids dans l'eau | : | 3,5 g |
| - mélange aqueux de semi-fini ci-dessus | : | 50,0 g |
| - système tensioactif non-ionique à 12,5 % d'extrait sec | : | 5,1 g |
| - $NH_4OH$ | : | 1,4 g |
| - eau déminéralisée | : | 9,5 g |
| Total | : | 100,0 g |

Cette composition aqueuse de primaire d'accroché présente les caractéristiques suivantes.

- le taux de résine fluorée dans la composition de primaire sèche est de l'ordre de 71,9 % en poids par rapport au poids total sec de la composition,
- le taux de polyamide-acide amique dans la composition de primaire sèche est de l'ordre de 17,1 % en poids par rapport au poids total sec de la composition,
- le taux de silice dans la composition est de 23/77 en poids par rapport au poids sec de polyamide-acide amique,
- l'extrait sec théorique est de 25,5 %,
- la viscosité (en coupe 2,5 selon la norme DIN EN ISO 2433/ASTM D5125) est de 65 sec.

Cette composition aqueuse de primaire d'accroché est enduite par pulvérisation en couche mince sur un support d'aluminium se présentant sous la forme d'une calotte (support préformé) préalablement soumise à un traitement de surface.

Les performances obtenues sont les suivantes :

- La mise en oeuvre de la couche mince de primaire d'accroché dans un système d'enduction en trois couches (couche de primaire telle que décrite ci-dessus + première couche de finition sans résine PAI et à base de PTFE appliquée en sec sur sec + deuxième couche de finition à base de PTFE) et fritté en conditions standards (11 minutes à 430°C) donne des cotations de 3 ou 4 aux trois cycles du test d'adhérence.
- Un test de corrosion du revêtement obtenu, réalisé par 24 heures de contact avec l'eau salée à 10 % et à l'ébullition, se traduit par 5 points de corrosion. Ce résultat est non conforme.
- La couche de primaire d'accroché comprenant une dispersion de silice colloïdale est analysée par TEM. La figure 2, qui est une image TEM d'une coupe de la couche de primaire ainsi formée, montre des agglomérats de charges sur toute l'épaisseur du film, de forme circulaire ou ovale, et de dimensions équivalentes sur toute l'épaisseur du film (longueur des agglomérats comprise entre environ 0,5 μm et environ 3 μm).

## Revendications

1. Composition de primaire hybride de revêtement antiadhésif comprenant une matrice de résine polyimide et/ou de résine polyamide-imide dans laquelle sont dispersés des domaines de silice ayant une taille inférieure à 200 nm,

dans un solvant aprotique polaire.

2. Composition de primaire hybride selon la revendication 1, dans laquelle la teneur relative en poids sec des domaines de silice par rapport à la matrice de résine polyimide et/ou de résine polyamide-imide est comprise entre 10 et 25 % dans ladite composition de primaire hybride.

3. Composition de primaire hybride selon l'une quelconque des revendications précédentes, dans laquelle le solvant aprotique polaire est présent à raison de 1 à 70 % en poids par rapport au poids total de la composition.

4. Composition de primaire hybride selon l'une quelconque des revendications précédentes, **caractérisée en ce qu'**elle est exempte de résine fluorocarbonée.

5. Composition de primaire de revêtement antiadhésif comprenant :

- une résine polyimide et/ou une résine polyamide-imide,
- un alcoxysilane et/ou un alcoxylate métallique,
- un agent de couplage apte à coupler la résine polyimide et/ou la résine polyamide-imide et l'alcoxysilane et/ou l'alcoxylate métallique, et
- un solvant aprotique polaire.

6. Composition selon la revendication 5, dans laquelle l'alcoxysilane est choisi parmi le méthyltriméthoxysilane (MTMS), le tétraméthoxysilane (TMOS), le tétraéthoxysilane (TEOS), le tétrapropoxysilane, le méthyltriéthoxysilane (MTES), le diméthyldiméthoxysilane, le phényltriéthoxysilane et leurs mélanges.

7. Composition selon l'une quelconque des revendications 5 à 6, dans laquelle la teneur totale relative en poids sec de l'agent de couplage par rapport à la résine polyimide et/ou la résine polyamide-imide est comprise entre 2 et 20 % dans ladite composition de primaire.

8. Composition selon l'une quelconque des revendications 5 à 7, dans laquelle l'agent de couplage est choisi parmi les silazanes, les dérivés de silanes et leurs mélanges.

9. Composition selon l'une quelconque des revendications 5 à 8, dans laquelle le solvant aprotique polaire est présent à raison de 1 à 70 % en poids par rapport au poids total de la composition.

10. Composition selon l'une quelconque des revendications 5 à 9, **caractérisée en ce qu'**elle est exempte de résine fluorocarbonée.

11. Revêtement antiadhésif comprenant au moins une couche de la composition de primaire hybride de revêtement antiadhésif selon l'une quelconque des revendications 1 à 4.

12. Procédé de préparation d'une composition de primaire hybride de revêtement antiadhésif selon l'une quelconque des revendications 1 à 4 ou d'une composition de primaire de revêtement antiadhésif selon l'une quelconque des revendications 5 à 10, le procédé comprenant les étapes suivantes :

a) l'introduction de l'agent de couplage dans une solution comprenant la résine polyimide et/ou la résine polyamide-imide et le solvant aprotique polaire ; et
b) l'ajout en milieu basique de l'alcoxysilane et/ou de l'alcoxylate métallique, et d'eau au mélange de l'étape a).

13. Procédé de préparation d'une composition de primaire hybride de revêtement antiadhésif selon l'une quelconque des revendications 1 à 4, le procédé comprenant les étapes suivantes :

a) l'introduction de l'agent de couplage dans une solution comprenant la résine polyimide et/ou la résine polyamide-imide et le solvant aprotique polaire ; et
b) l'ajout de l'alcoxysilane et/ou de l'alcoxylate métallique préhydrolysé au mélange de l'étape a).

14. Procédé selon la revendication 13 de préparation d'une composition de primaire hybride de revêtement antiadhésif, comprenant en outre une étape c) d'hydrolyse de l'alcoxysilane et/ou de l'alcoxylate métallique pour obtenir l'alcoxysilane et/ou l'alcoxylate métallique pré-hydrolysé, l'étape c) d'hydrolyse étant réalisée avant l'étape b) et

comprenant :

- l'hydrolyse en milieu basique de l'alcoxysilane et/ou de l'alcoxylate métallique dans un mélange d'eau et d'alcool, ou
- l'hydrolyse en milieu basique de l'alcoxysilane et/ou de l'alcoxylate métallique dans un mélange d'eau et de solvant aprotique polaire.

**15.** Procédé de fabrication d'un article comprenant un revêtement antiadhésif selon la revendication 11, le procédé comprenant les étapes suivantes :

A) la fourniture d'un support présentant deux faces opposées ;
B) l'application sur au moins une des faces dudit support

- d'au moins une couche de la composition de primaire hybride de revêtement antiadhésif selon l'une quelconque des revendications 1 à 4, ou
- d'au moins une couche de composition de primaire hybride de revêtement antiadhésif obtenue selon l'une quelconque des revendications 12 à 14 ;

C) la cuisson de l'ensemble à une température comprise entre 390°C et 430°C.

**16.** Article susceptible d'être obtenu selon le procédé tel que défini selon la revendication 15.

**Patentansprüche**

**1.** Hybride Antihaftbeschichtung-Grundierungszusammensetzung, umfassend in einem aprotischen polaren Lösemittel eine Polyimidharz- und/oder Polyamidimidharzmatrix, wobei Silicadomänen mit einer Größe unterhalb von 200 nm dispergiert sind.

**2.** Hybride Grundierungszusammensetzung nach Anspruch 1, wobei der relative Gehalt an Silicadomänen als Trockengewicht bezogen auf die Polyimidharz- und/oder Polyamidimidharzmatrix im Bereich zwischen 10 und 25 % in der hybriden Grundierungszusammensetzung liegt.

**3.** Hybride Grundierungszusammensetzung nach einem der vorstehenden Ansprüche, wobei das aprotische polare Lösemittel in einer Menge von 1 bis 70 Gewichts-% bezogen auf das Gesamtgewicht der Zusammensetzung vorhanden ist.

**4.** Hybride Grundierungszusammensetzung nach einem der vorstehenden Ansprüche, **dadurch gekennzeichnet, dass** sie frei von Fluorkohlenstoffharz ist.

**5.** Antihaftbeschichtung-Grundierungszusammensetzung, umfassend:

- ein Polyimidharz und/oder ein Polyamidimidharz,
- ein Alkoxysilan und/oder ein Metallalkoxylat,
- ein Kupplungsmittel, das in der Lage ist, das Polyimidharz und/oder das Polyamidimidharz und das Alkoxysilan und/oder das Metallalkoxylat zu kuppeln, und
- ein aprotisches polares Lösemittel.

**6.** Zusammensetzung nach Anspruch 5, wobei das Alkoxysilan aus Methyltrimethoxysilan (MTMS), Tetramethoxysilan (TMOS), Tetraethoxysilan (TEOS), Tetrapropoxysilan, Methyltriethoxysilan (MTES), Dimethyldimethoxysilan, Phenyltriethoxysilan und deren Mischungen ausgewählt ist.

**7.** Zusammensetzung nach einem der Ansprüche 5 bis 6, wobei der relative Gesamtgehalt des Kupplungsmittels als Trockengewicht bezogen auf das Polyimidharz und/oder das Polyamidimidharz im Bereich zwischen 2 und 20 % in der Grundierungszusammensetzung liegt.

**8.** Zusammensetzung nach einem der Ansprüche 5 bis 7, wobei das Kupplungsmittel aus Silazanen, Derivaten von Silanen und deren Mischungen ausgewählt ist.

**9.** Zusammensetzung nach einem der Ansprüche 5 bis 8, wobei das aprotische polare Lösemittel in einer Menge von 1 bis 70 Gewichts-% bezogen auf das Gesamtgewicht der Zusammensetzung vorhanden ist.

**10.** Zusammensetzung nach einem der Ansprüche 5 bis 9, **dadurch gekennzeichnet, dass** sie frei von Fluorkohlenstoffharz ist.

**11.** Antihaftbeschichtung, umfassend mindestens eine Schicht der hybriden Antihaftbeschichtung-Grundierungszusammensetzung nach einem der Ansprüche 1 bis 4.

**12.** Zubereitungsverfahren einer hybriden Antihaftbeschichtung-Grundierungszusammensetzung nach einem der Ansprüche 1 bis 4 oder einer Antihaftbeschichtung-Grundierungszusammensetzung nach einem der Ansprüche 5 bis 10, wobei das Verfahren die folgenden Schritte umfasst:

a) die Einführung des Kupplungsmittels in eine Lösung, umfassend das Polyimidharz und/oder das Polyamidimidharz und das aprotische polare Lösemittel; und
b) das Hinzufügen des Alkoxysilans und/oder des Metallalkoxylats in basischem Milieu und von Wasser zur Mischung aus dem Schritt a).

**13.** Zubereitungsverfahren einer hybriden Antihaftbeschichtung-Grundierungszusammensetzung nach einem der Ansprüche 1 bis 4, wobei das Verfahren die folgenden Schritte umfasst:

a) die Einführung des Kupplungsmittels in eine Lösung, umfassend das Polyimidharz und/oder das Polyamidimidharz und das aprotische polare Lösemittel; und
b) das Hinzufügen des vorhydrolysierten Alkoxysilans und/oder des vorhydrolysierten Metallalkoxylats zur Mischung aus dem Schritt a).

**14.** Verfahren nach Anspruch 13 zur Zubereitung einer hybriden Antihaftbeschichtung-Grundierungszusammensetzung, weiter umfassend einen Schritt c) der Hydrolyse des Alkoxysilans und/oder des Metallalkoxylats zum Erhalten von vorhydrolysiertem Alkoxysilan und/oder vorhydrolysiertem Metallalkoxylat, wobei der Schritt c) der Hydrolyse vor Schritt b) durchgeführt wird und umfasst:

- die Hydrolyse des Alkoxysilans und/oder des Metallalkoxylats in basischem Milieu in einer Mischung aus Wasser und Alkohol, oder
- die Hydrolyse des Alkoxysilans und/oder des Metallalkoxylats in basischem Milieu in einer Mischung aus Wasser und aprotischem polarem Lösemittel.

**15.** Herstellungsverfahren eines Artikels, umfassend eine Antihaftbeschichtung nach Anspruch 11, wobei das Verfahren die folgenden Schritte umfasst:

A) das Bereitstellen eines zwei gegenüberliegende Seiten aufweisenden Trägers;
B) das Auftragen auf mindestens eine der Seiten des Trägers

- von mindestens einer Schicht der hybriden Antihaftbeschichtung-Grundierungszusammensetzung nach einem der Ansprüche 1 bis 4, oder
- von mindestens einer Schicht der hybriden Antihaftbeschichtung-Grundierungszusammensetzung, erhalten nach einem der Ansprüche 12 bis 14;

C) das Aushärten der Gesamtheit bei einer Temperatur im Bereich zwischen 390 °C und 430 °C.

**16.** Artikel, der nach dem Verfahren nach Anspruch 15 erhalten werden kann.

## Claims

**1.** Non-stick coating hybrid primer composition comprising in a polar aprotic solvent a matrix of polyimide resin and/or polyamide-imide resin wherein silica domains having a size less than 200 nm are dispersed.

**2.** Hybrid primer composition according to claim 1, wherein the relative dry weight content of the silica domains relative

to the polyimide resin and/or polyamide-imide resin matrix is between 10 and 25% of said hybrid primer composition.

**3.** Hybrid primer composition according to any preceding claim, wherein the polar aprotic solvent is present at a concentration of 1 to 70% by weight relative to the total weight of the composition.

**4.** Hybrid primer composition according to any preceding claim, **characterised in that** it is free of fluorocarbon resin.

**5.** Non-stick coating primer composition comprising:

- a polyimide resin and/or polyamide-imide resin,
- an alkoxysilane and/or a metal alkoxylate,
- a coupling agent able to link the polyimide resin and/or polyamide-imide resin with the alkoxysilane and/or the metal alkoxylate, and
- a polar aprotic solvent.

**6.** Composition according to claim 5, wherein the alkoxysilane is selected from methyltrimethoxysilane (MTMS), tetramethoxysilane (TMOS), tetraethoxysilane (TEOS), tetrapropoxysilane, methyltriethoxysilane (MTES), dimethyldimethoxysilane, phenyltriethoxysilane and mixtures thereof.

**7.** Composition according to any of claims 5 to 6, wherein the total relative dry weight content of the coupling agent relative to the polyimide resin and/or polyamide-imide resin is between 2 and 20% of said primer composition.

**8.** Composition according to any of claims 5 to 7, wherein the coupling agent is selected from silazanes, silane derivatives and mixtures thereof.

**9.** Composition according to any of claims 5 to 8, wherein the polar aprotic solvent is present at a concentration of 1 to 70% by weight relative to the total weight of the composition.

**10.** Composition according to any of claims 5 to 9, **characterised in that** it is free of fluorocarbon resin.

**11.** Non-stick coating comprising at least one layer of the non-stick coating hybrid primer composition according to any of claims 1 to 4.

**12.** Method of preparing a non-stick coating hybrid primer composition according to any of claims 1 to 4 or a non-stick coating primer composition according to any of claims 5 to 10, the method comprising the following steps:

a) introducing the coupling agent into a solution comprising the polyimide resin and/or polyamide-imide resin and the polar aprotic solvent; and
b) adding in a basic medium the alkoxysilane and/or the metal alkoxylate, and water to the mixture of step a).

**13.** Method of preparing a non-stick coating hybrid primer composition according to any of claims 1 to 4, the method comprising the following steps:

a) introducing the coupling agent into a solution comprising the polyimide resin and/or polyamide-imide resin and the polar aprotic solvent; and
b) adding the alkoxysilane and/or the pre-hydrolysed metal alkoxylate to the mixture of step a).

**14.** Method according to claim 13 for preparing a non-stick coating hybrid primer composition, further comprising a step c) of hydrolysis of the alkoxysilane and/or the metal alkoxylate to produce pre-hydrolysed alkoxysilane and/or metal alkoxylate, the hydrolysis step c) being carried out prior to step b) and comprising:

- the hydrolysis in a basic medium of the alkoxysilane and/or the metal alkoxylate in a mixture of water and alcohol, or
- the hydrolysis in a basic medium of the alkoxysilane and/or the metal alkoxylate in a mixture of water and polar aprotic solvent.

**15.** Method of manufacturing an item comprising a non-stick coating according to claim 11, the method comprising the following steps:

A) providing a substrate having two opposite surfaces;
B) applying onto at least one of surfaces of said substrate

- of at least one layer of the non-stick coating hybrid primer composition according to any of claims 1 to 4, or
- of at least one layer of non-stick coating hybrid primer composition obtained according to any of claims 12 to 14;

C) sintering the whole at a temperature between 390°C and 430°C.

**16.** Item able to be obtained according to the method such as defined according to claim 15.

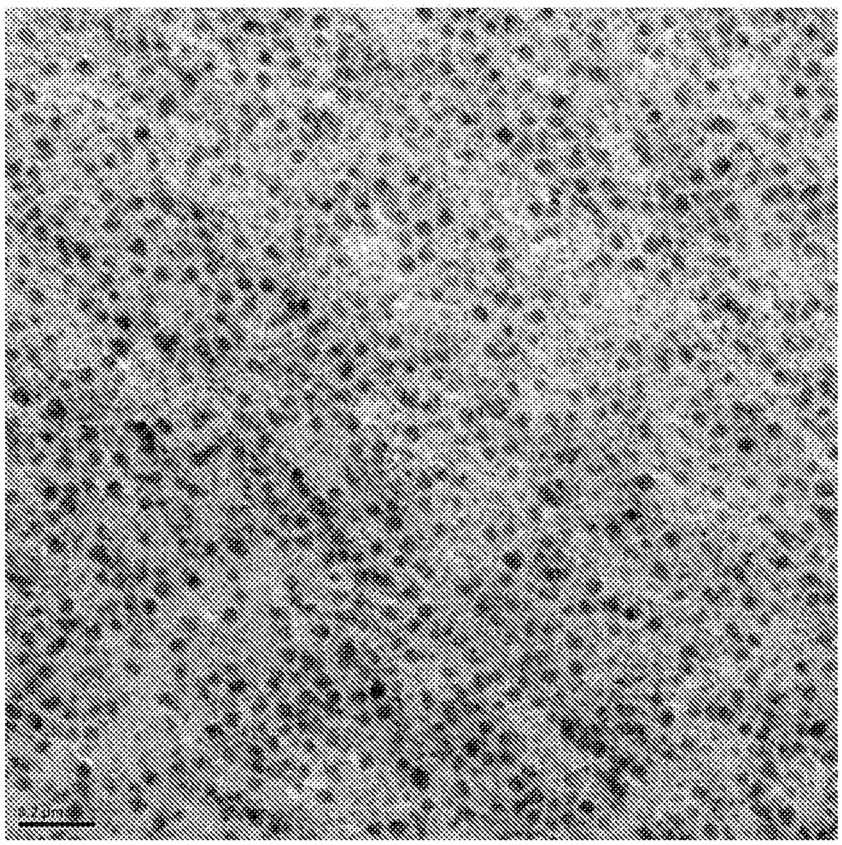

FIG 1

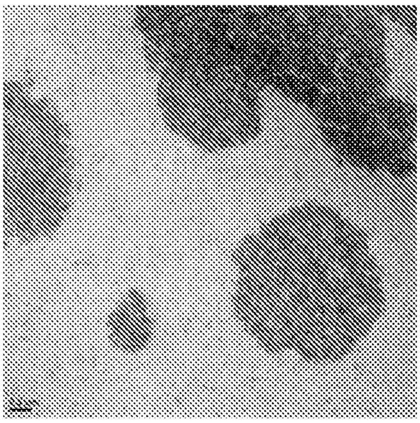

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0386379 A
- FR 2625450
- KR 20090111951
- US 20050245715 A

### Littérature non-brevet citée dans la description

- **PENG LIU.** *Iranian polymer Journal,* 2005, vol. 14 (11), 968-972